# EUROPEAN PATENT APPLICATION

(11) **EP 4 814 868 A1**
(43) Date of publication of application: **30.09.2026**
(21) Application number: 24893132.1
(22) Date of filing: 22.10.2024
(51) Int. Cl.: G06T 7/246

(54) **MOTION TRAJECTORY IMAGE GENERATION METHOD AND APPARATUS, STORAGE MEDIUM, AND ELECTRONIC DEVICE**

(30) Priority: 21.11.2023 CN 202311558456
(71) Applicant: Huizhou TCL Mobile Communication Co., Ltd, Guangdong 516006 (CN)
(72) Inventor: ZHONG, Xiaoming, Huizhou, Guangdong 516006 (CN)
(74) Representative: Murgitroyd & Company
(86) International application number: PCT/CN2024/126582
(87) International publication number: WO 2025/107973

(57) **Abstract**

The present application relates to the technical field of image processing, and discloses a motion trajectory image generation method and apparatus, a storage medium, and an electronic device. The method comprises: determining area types on the basis of motion parameters, foreground and background information, and alignment position information; and performing noise reduction on area images on the basis of noise reduction modes corresponding to the area types, so as to obtain a plurality of background noise-reduced images and foreground noise-reduced images which are used for composing a subject motion trajectory image. The present application improves the image quality and trajectory integrity of motion trajectory images.

## Description

This application claims priority to Chinese Patent Applications No. 202311558456.5, filed on November 21, 2023 and entitled "MOTION TRAJECTORY IMAGE GENERATION METHOD AND APPARATUS, STORAGE MEDIUM, AND ELECTRONIC DEVICE". The entire disclosures of the above application are incorporated herein by reference.

### TECHNICAL FIELD

The present application relates to the technical field of image processing, and in particular, to a motion trajectory image generation method and apparatus, a storage medium, and an electronic device.

### BACKGROUND TECHNOLOGY

A motion trajectory image is a trajectory image reflecting a motion trajectory of a subject, obtained by compositing moving subjects in multiple images into one image. However, in the related art, there are relatively great limitations in generating motion trajectory images for fast-moving subjects, specifically as follows:
(1) Fast movement of a subject may cause a motion blur problem, resulting in obvious motion distortion of the subject and blurred subject trajectories in a synthesized trajectory photo, thereby affecting the quality of the trajectory photo.
(2) For a subject moving over a large range, acquired images are usually limited by a relatively small field of view constrained by a compositing mode, making it difficult to capture a complete motion process, such that the generated motion trajectory image has poor motion trajectory integrity.

### Technical Problem

In existing motion trajectory image generation modes, the generated motion trajectory images in most motion scenarios suffer from poor image quality and poor trajectory integrity, resulting in poor user experience.

### SUMMARY OF INVENTION

Embodiments of the present application provide a motion trajectory image generation solution, which can effectively improve image quality and trajectory integrity of generated motion trajectory images in most motion scenarios, thereby improving user experience.

Embodiments of the present application provide the following technical solutions:

According to an embodiment of the present application, a motion trajectory image generation method is provided, comprising: obtaining a plurality of candidate composite images; aligning the plurality of candidate composite images to a unified coordinate system based on non-subject backgrounds in each of the candidate composite images, to obtain alignment position information, under the unified coordinate system, of a subject foreground and the non-subject background in each of the candidate composite images; determining, according to a motion parameter corresponding to each of the candidate composite images, foreground and background information, and the alignment position information, an area type of different image areas under the unified coordinate system; and performing noise reduction on area images aligned to the respective image areas according to noise reduction modes corresponding to the area types of the respective image areas, to obtain a plurality of background noise-reduced images and a plurality of foreground noise-reduced images, wherein the plurality of background noise-reduced images and the plurality of foreground noise-reduced images are used for composing a subject motion trajectory image.

In some embodiments of the present application, the determining, according to a motion parameter corresponding to each of the candidate composite images, foreground and background information, and the alignment position information, an area type of different image areas under the unified coordinate system comprises: obtaining, according to the motion parameter, the foreground and background information, and the alignment position information corresponding to each of the candidate composite images, a motion/still type, a foreground/background type, and an overlapping/non-overlapping type corresponding to region images aligned to the respective image areas; and obtaining the area type of each image area according to a combination of the motion/still type, the foreground/background type, and the overlapping/non-overlapping type corresponding to the region images in the respective image areas.

In some embodiments of the present application, the performing noise reduction on area images aligned to the respective image areas according to noise reduction modes corresponding to the area types of the respective image areas, to obtain a plurality of background noise-reduced images and a plurality of foreground noise-reduced images comprises: performing noise reduction on region images in image areas of an overlapping type through a multi-frame fusion noise reduction mode, to obtain fusion noise-reduced region images; performing noise reduction on region images in image areas of a non-overlapping type through a single-frame fusion noise reduction mode, to obtain single-frame noise-reduced region images; and obtaining the plurality of background noise-reduced images and the plurality of foreground noise-reduced images according to the fusion noise-reduced region images and the single-frame noise-reduced region images.

In some embodiments of the present application, the obtaining a plurality of candidate composite images comprises: obtaining a plurality of to-be-processed images; obtaining at least one of a focus state, a subject position, or an exposure state corresponding to each of the to-be-processed images, to obtain screening parameters; and screening, from the plurality of to-be-processed images according to the screening parameters corresponding to the respective to-be-processed images, to-be-processed images satisfying predetermined conditions, to obtain the plurality of candidate composite images, wherein the predetermined conditions comprise at least one of not being in a focusing process, not being in an exposure convergence process, or satisfying a subject definition requirement.

In some embodiments of the present application, the plurality of to-be-processed images are acquired according to predetermined exposure parameters; and the method further comprises: obtaining motion parameters and allowable displacement threshold values corresponding to the respective to-be-processed images; determining an allowable exposure duration threshold value according to the motion parameters and the allowable displacement threshold values; obtaining, according to scene brightness, a predetermined preferred exposure duration less than the allowable exposure duration threshold value; and updating the predetermined exposure parameters based on the predetermined preferred exposure duration.

In some embodiments of the present application, the plurality of to-be-processed images are acquired according to predetermined focus parameters; and the method further comprises: calculating a focus area according to subject positions corresponding to the respective to-be-processed images; and updating the predetermined focus parameters according to the focus area.

In some embodiments of the present application, after the performing noise reduction on area images aligned to the respective image areas according to noise reduction modes corresponding to the area types of the respective image areas, to obtain a plurality of background noise-reduced images and a plurality of foreground noise-reduced images, the method further comprises: stitching the plurality of background noise-reduced images into an integral background image under the unified coordinate system according to the alignment position information; fusing the plurality of foreground noise-reduced images with the integral background image, to obtain a fused trajectory image; and obtaining the subject motion trajectory image according to the fused trajectory image.

According to an embodiment of the present application, a motion trajectory image generation apparatus is provided, comprising: an image obtaining unit, configured to obtain a plurality of candidate composite images; an image alignment unit, configured to align the plurality of candidate composite images to a unified coordinate system based on non-subject backgrounds in each of the candidate composite images, to obtain alignment position information, under the unified coordinate system, of a subject foreground and the non-subject background in each of the candidate composite images; a type classification unit, configured to determine, according to a motion parameter corresponding to each of the candidate composite images, foreground and background information, and the alignment position information, an area type of different image areas under the unified coordinate system; and an image noise reduction unit, configured to perform noise reduction on area images aligned to the respective image areas according to noise reduction modes corresponding to the area types of the respective image areas, to obtain a plurality of background noise-reduced images and a plurality of foreground noise-reduced images, wherein the plurality of background noise-reduced images and the plurality of foreground noise-reduced images are used for composing a subject motion trajectory image.

In some embodiments of the present application, the type classification unit is configured to: obtain, according to the motion parameter, the foreground and background information, and the alignment position information corresponding to each of the candidate composite images, a motion/still type, a foreground/background type, and an overlapping/non-overlapping type corresponding to region images aligned to the respective image areas; and obtain the area type of each image area according to a combination of the motion/still type, the foreground/background type, and the overlapping/non-overlapping type corresponding to the region images in the respective image areas.

In some embodiments of the present application, the image noise reduction unit is configured to: perform noise reduction on region images in image areas of an overlapping type through a multi-frame fusion noise reduction mode, to obtain fusion noise-reduced region images; perform noise reduction on region images in image areas of a non-overlapping type through a single-frame fusion noise reduction mode, to obtain single-frame noise-reduced region images; and obtain the plurality of background noise-reduced images and the plurality of foreground noise-reduced images according to the fusion noise-reduced region images and the single-frame noise-reduced region images.

In some embodiments of the present application, the image obtaining unit is configured to: obtain a plurality of to-be-processed images; obtain at least one of a focus state, a subject position, or an exposure state corresponding to each of the to-be-processed images, to obtain screening parameters; and screen, from the plurality of to-be-processed images according to the screening parameters corresponding to the respective to-be-processed images, to-be-processed images satisfying predetermined conditions, to obtain the plurality of candidate composite images, wherein the predetermined conditions comprise at least one of not being in a focusing process, not being in an exposure convergence process, or satisfying a subject definition requirement.

In some embodiments of the present application, the plurality of to-be-processed images are acquired according to predetermined exposure parameters; and the apparatus further comprises an exposure adjustment unit, configured to: obtain motion parameters and allowable displacement threshold values corresponding to the respective to-be-processed images; determine an allowable exposure duration threshold value according to the motion parameters and the allowable displacement threshold values; obtain, according to scene brightness, a predetermined preferred exposure duration less than the allowable exposure duration threshold value; and update the predetermined exposure parameters based on the predetermined preferred exposure duration.

In some embodiments of the present application, the plurality of to-be-processed images are acquired according to predetermined focus parameters; and the apparatus further comprises a focus adjustment unit, configured to: calculate a focus area according to subject positions corresponding to the respective to-be-processed images; and update the predetermined focus parameters according to the focus area.

In some embodiments of the present application, after the performing noise reduction on area images aligned to the respective image areas according to noise reduction modes corresponding to the area types of the respective image areas, to obtain a plurality of background noise-reduced images and a plurality of foreground noise-reduced images, the apparatus further comprises a fusion unit, configured to: stitch the plurality of background noise-reduced images into an integral background image under the unified coordinate system according to the alignment position information; fuse the plurality of foreground noise-reduced images with the integral background image, to obtain a fused trajectory image; and obtain the subject motion trajectory image according to the fused trajectory image.

According to another embodiment of the present application, a storage medium is provided, wherein a computer program is stored thereon, and when the computer program is executed by a processor of a computer, the computer is caused to perform the method described in the embodiments of the present application.

According to another embodiment of the present application, an electronic device is provided, which may comprise: a memory storing a computer program; and a processor configured to read the computer program stored in the memory, and execute the method described in the embodiments of the present application.

According to another embodiment of the present application, a computer program product or a computer program is provided, wherein the computer program product or the computer program comprises computer instructions, and the computer instructions are stored in a computer-readable storage medium. A processor of a computer device reads the computer instructions from the computer-readable storage medium, and executes the computer instructions, such that the computer device performs the methods provided in various optional implementations described in the embodiments of the present application.

### Beneficial Effects

In the embodiments of the present application, a plurality of candidate composite images are obtained; the plurality of candidate composite images are aligned to a unified coordinate system based on non-subject backgrounds in each of the candidate composite images, to obtain alignment position information, under the unified coordinate system, of a subject foreground and the non-subject background in each of the candidate composite images; an area type of different image areas under the unified coordinate system is determined according to a motion parameter corresponding to each of the candidate composite images, foreground and background information, and the alignment position information; and noise reduction is performed on area images aligned to the respective image areas according to noise reduction modes corresponding to the area types of the respective image areas, to obtain a plurality of background noise-reduced images and a plurality of foreground noise-reduced images, wherein the plurality of background noise-reduced images and the plurality of foreground noise-reduced images are used for composing a subject motion trajectory image.

In this manner, after background separation is performed on the plurality of candidate composite images, the plurality of candidate composite images are independently aligned to the unified coordinate system according to the non-subject backgrounds, such that acquisition of original images is not limited by a field of view, and an image acquisition process may follow movement of a subject to enlarge a field-of-view range, thereby improving trajectory integrity of the motion trajectory image in a large-range motion scenario. Furthermore, by classifying area types of image areas under the unified coordinate system, and performing noise reduction on area images aligned to the respective image areas according to noise reduction modes corresponding to the area types of the respective image areas, motion blur caused by exposure parameters and the like during rapid movement of the subject can be effectively avoided, thereby further ensuring image quality of the synthesized motion trajectory image. Accordingly, the present application as a whole can effectively improve image quality and trajectory integrity of generated motion trajectory images in most motion scenarios, thereby improving user experience.

### BRIEF DESCRIPTION OF THE DRAWINGS

In order to more clearly describe the technical solutions in the embodiments of the present application, the drawings required for describing the embodiments will be briefly introduced below. Apparently, the drawings described below are merely some embodiments of the present application. A person skilled in the art may further obtain other drawings according to these drawings without creative efforts.
FIG. 1 illustrates a flowchart of a motion trajectory image generation method according to an embodiment of the present application.
FIG. 2 illustrates a block diagram of an apparatus for generating a motion trajectory image by applying embodiments of the present application in one scenario.
FIG. 3 illustrates a flowchart of generating a motion trajectory image by applying embodiments of the present application in one scenario.
FIG. 4 illustrates a block diagram of a motion trajectory image generation apparatus according to an embodiment of the present application.
FIG. 5 illustrates a block diagram of an electronic device according to an embodiment of the present application.

### DETAILED DESCRIPTION OF THE PREFERRED EMBODIMENTS

The present disclosure is further described in detail below with reference to the accompanying drawings and embodiments. It should be understood that the embodiments provided herein are merely used for explaining the present disclosure, and are not intended to limit the present disclosure. In addition, the embodiments provided below are partial embodiments for implementing the present disclosure, rather than all embodiments for implementing the present disclosure. Technical solutions described in the embodiments of the present disclosure may be implemented in any combination without conflict.

It should be noted that, in the embodiments of the present disclosure, the terms "comprise", "include", or any other variations thereof are intended to cover non-exclusive inclusion, such that a method or apparatus comprising a series of elements includes not only the explicitly recited elements, but also includes other elements not explicitly listed, or elements inherent to implementation of the method or apparatus. Without further limitation, an element defined by the phrase "comprising a ..." does not exclude existence of additional related elements in a method or apparatus comprising the element (for example, steps in a method or units in an apparatus, wherein the units may be partial circuits, partial processors, partial programs or software, and the like).

For example, the motion trajectory image generation method provided in the embodiments of the present disclosure comprises a series of steps, but the motion trajectory image generation method provided in the embodiments of the present disclosure is not limited to the recited steps. Similarly, the motion trajectory image generation apparatus provided in the embodiments of the present disclosure comprises a series of units, but the apparatus provided in the embodiments of the present disclosure is not limited to comprising the explicitly recited units, and may further comprise units required for obtaining related information or processing information.

Unless otherwise defined, all technical and scientific terms used herein have the same meanings as commonly understood by a person skilled in the technical field of the present disclosure. The terms used herein are merely for purposes of describing specific embodiments, and are not intended to limit the present disclosure.

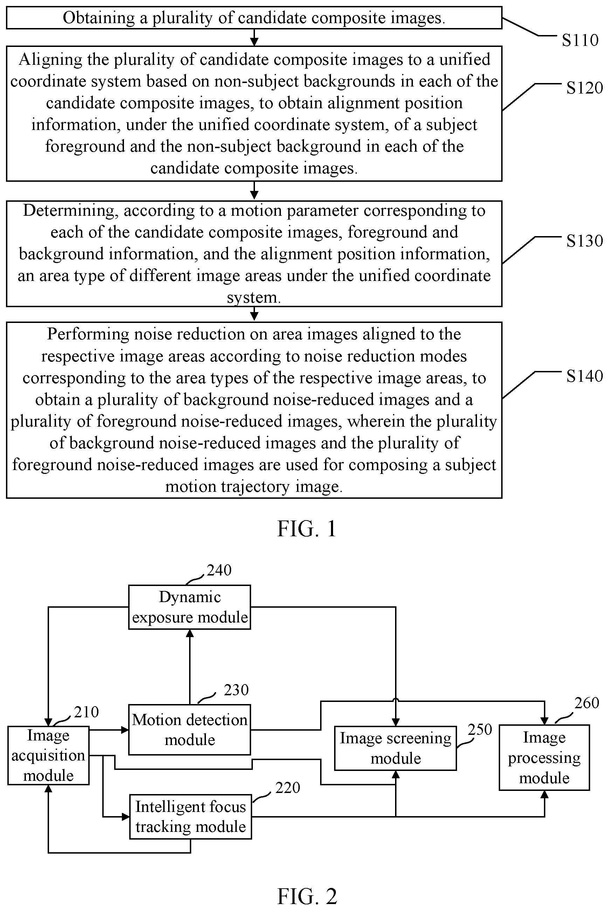

FIG. 1 schematically illustrates a flowchart of a motion trajectory image generation method according to an embodiment of the present application. An execution subject of the motion trajectory image generation method may be any device or server having processing capability. The device may be, for example, a television, a computer, a mobile phone, a smart watch, or a home appliance device, and the server may be, for example, a cloud server or a physical server. In one specific embodiment of the present application, the device serving as the execution subject is specifically a mobile phone.

As illustrated in FIG. 1, the motion trajectory image generation method may comprise steps S110 to S140.

Step S110: obtaining a plurality of candidate composite images.

Step S120: aligning the plurality of candidate composite images to a unified coordinate system based on non-subject backgrounds in each of the candidate composite images, to obtain alignment position information, under the unified coordinate system, of a subject foreground and the non-subject background in each of the candidate composite images.

Step S130: determining, according to a motion parameter corresponding to each of the candidate composite images, foreground and background information, and the alignment position information, an area type of different image areas under the unified coordinate system.

Step S140: performing noise reduction on area images aligned to the respective image areas according to noise reduction modes corresponding to the area types of the respective image areas, to obtain a plurality of background noise-reduced images and a plurality of foreground noise-reduced images, wherein the plurality of background noise-reduced images and the plurality of foreground noise-reduced images are used for composing a subject motion trajectory image.

The plurality of candidate composite images are images used for composing the subject motion trajectory image. In some scenarios, the plurality of candidate composite images may be images in an image sequence captured in real time by a device for a moving subject (for example, a moving person), such that motion trajectory image generation may be performed online in real time based on embodiments of the present application. In some other scenarios, the plurality of candidate composite images may be images in a pre-stored image sequence, such that motion trajectory image generation may be performed offline based on embodiments of the present application.

A subject foreground (that is, an area where the subject is located in the candidate composite image) and a non-subject background (that is, an area other than the subject foreground in the candidate composite image) may be separated from each candidate composite image.

Based on the non-subject background in each candidate composite image, the plurality of candidate composite images may be mapped and aligned to a unified coordinate system, to obtain alignment position information, under the unified coordinate system, of the subject foreground and the non-subject background in each candidate composite image. The alignment position information may comprise coordinate positions, under the unified coordinate system, of pixel points in the subject foreground and the non-subject background.

By mapping and aligning the plurality of candidate composite images to the unified coordinate system, images of a moving subject moving over a large range may be mapped to the unified coordinate system to obtain a large-range motion image. The plurality of candidate composite images are independently aligned to the unified coordinate system according to the non-subject backgrounds, such that acquisition of original images is not limited by a field of view, and an image acquisition process may follow movement of the subject to enlarge a field-of-view range.

The large-range motion image under the unified coordinate system may be divided into different image areas according to a predetermined division mode. According to the motion parameters, foreground and background information, and alignment position information corresponding to each candidate composite image, motion/still types, foreground/background types, and overlapping/non-overlapping types of partial region images aligned to the respective image areas may be obtained, thereby determining area types of different image areas under the unified coordinate system.

The motion parameters may specifically be motion states of respective pixel points in the candidate composite image, which may be obtained through motion detection. The foreground and background information may specifically be information describing whether respective pixel points in the candidate composite image belong to a foreground or a background. The alignment position information may specifically be coordinate positions, in the unified coordinate system, of respective pixel points in the candidate composite image.

Noise reduction is performed on region images aligned to the respective image areas according to preset noise reduction modes corresponding to the area types of the respective image areas, to obtain noise-reduced region images in the respective image areas. The noise-reduced region images belonging to the subject foreground and the non-subject background in the respective candidate composite images may be re-stitched to obtain a noise-reduced subject foreground (that is, a foreground noise-reduced image) and a noise-reduced non-subject background (that is, a background noise-reduced image), thereby obtaining a plurality of background noise-reduced images and a plurality of foreground noise-reduced images.

The plurality of foreground noise-reduced images are motion images of the moving subject after noise reduction and with improved clarity. A subject motion trajectory image of the moving subject may be composed according to the plurality of background noise-reduced images and the plurality of foreground noise-reduced images. The subject motion trajectory image may clearly present a subject motion trajectory of the moving subject over a large range.

In this manner, based on steps S110 to S140, after background separation is performed on the plurality of candidate composite images, the plurality of candidate composite images are independently aligned to the unified coordinate system according to the non-subject backgrounds, such that acquisition of original images is not limited by a field of view, and an image acquisition process may follow movement of the subject to enlarge a field-of-view range, thereby improving trajectory integrity of the motion trajectory image in a large-range motion scenario. Furthermore, by classifying area types of image areas under the unified coordinate system, and performing noise reduction on area images aligned to the respective image areas according to noise reduction modes corresponding to the area types of the respective image areas, motion blur caused by exposure parameters and the like during rapid movement of the subject can be effectively avoided, thereby further ensuring image quality of the synthesized motion trajectory image. Accordingly, the present application as a whole can effectively improve image quality and trajectory integrity of generated motion trajectory images in most motion scenarios, thereby improving user experience.

Further optional specific embodiments of respective steps performed during motion trajectory image generation in the embodiment of FIG. 1 are described below.

In one embodiment, the obtaining a plurality of candidate composite images comprises: obtaining a plurality of to-be-processed images; obtaining at least one of a focus state, a subject position, or an exposure state corresponding to each of the to-be-processed images, to obtain screening parameters; and screening, from the plurality of to-be-processed images according to the screening parameters corresponding to the respective to-be-processed images, to-be-processed images satisfying predetermined conditions, to obtain the plurality of candidate composite images, wherein the predetermined conditions comprise at least one of not being in a focusing process, not being in an exposure convergence process, or satisfying a subject definition requirement.

The plurality of to-be-processed images may be an image sequence captured in real time for a moving subject (for example, a moving person). In this case, automatic focus tracking may be performed on each of the to-be-processed images, to obtain a focus state corresponding to each of the to-be-processed images (used to reflect whether the to-be-processed image is an image during a focusing process) and a subject position (that is, a position where the moving subject is located). At the same time, an exposure state for capturing each of the to-be-processed images may be detected (used to reflect whether the to-be-processed image is an image during an exposure convergence process).

The plurality of to-be-processed images may also be a pre-stored image sequence. When storing the plurality of to-be-processed images, information corresponding to the to-be-processed images, such as motion parameters, exposure states, focus states, and subject positions, may be packaged and stored frame by frame.

At least one of a focus state, a subject position, or an exposure state corresponding to each of the to-be-processed images is obtained, to obtain screening parameters corresponding to the respective to-be-processed images. According to the screening parameters corresponding to the respective to-be-processed images, to-be-processed images satisfying predetermined conditions may be screened from the plurality of to-be-processed images, to obtain a plurality of candidate composite images, wherein the predetermined conditions comprise at least one of not being in a focusing process, not being in an exposure convergence process, or satisfying a subject definition requirement.

Whether a to-be-processed image is in a focusing process may be determined according to the focus state, thereby screening out to-be-processed images not in a focusing process. Whether a to-be-processed image is in an exposure convergence process may be determined according to the exposure state, thereby screening out to-be-processed images not in an exposure convergence process. Subject definition in the to-be-processed image may be analyzed according to whether a subject position in the to-be-processed image is at a center or an edge, a proportion occupied by the subject position, and the like, thereby screening out to-be-processed images satisfying the subject definition requirement.

Accordingly, the plurality of candidate composite images are to-be-processed images screened from the plurality of to-be-processed images and satisfying at least one of not being in a focusing process, not being in an exposure convergence process, or satisfying the subject definition requirement. The screened candidate composite images satisfy the predetermined conditions, that is, the candidate composite images have relatively high image quality. Composing the subject motion trajectory image based on the screened candidate composite images may further improve image quality of the motion trajectory image.

It may be understood that, in other embodiments, a plurality of to-be-processed images may be obtained, and the plurality of to-be-processed images may be directly used as the plurality of candidate composite images without screening.

Further, in one embodiment, the plurality of to-be-processed images are acquired according to predetermined exposure parameters; and the method further comprises: obtaining motion parameters and allowable displacement threshold values corresponding to the respective to-be-processed images; determining an allowable exposure duration threshold value according to the motion parameters and the allowable displacement threshold values; obtaining, according to scene brightness, a predetermined preferred exposure duration less than the allowable exposure duration threshold value; and updating the predetermined exposure parameters based on the predetermined preferred exposure duration.

The plurality of to-be-processed images are acquired according to predetermined exposure parameters. For example, a sequence of the plurality of to-be-processed images may be obtained by real-time photographing through a device. By selecting appropriate exposure parameters according to the motion parameters and the allowable displacement threshold values to update the predetermined exposure parameters, occurrence of motion distortion and blur in subsequently acquired to-be-processed images may be reduced, stability of image exposure effects may be ensured, and image quality of the motion trajectory image may be further improved as a whole.

Obtaining the motion parameters and allowable displacement threshold values corresponding to the respective to-be-processed images may specifically comprise: estimating image motion/static regions and motion speeds of respective points in motion regions frame by frame according to optical flow information changes between adjacent image frames through a motion detection algorithm, and completing matching between motion speeds and image frames, thereby obtaining motion speeds (that is, motion parameters) corresponding to pixel points in the respective to-be-processed images. At the same time, a maximum allowable displacement without motion distortion and blur in an image frame may be preset as the allowable displacement threshold value.

According to the motion parameters and the allowable displacement threshold values, a maximum allowable exposure duration may be calculated as the allowable exposure duration threshold value. According to scene brightness (that is, environmental brightness for acquiring the to-be-processed images), one predetermined exposure duration matching the scene brightness may be obtained from among a plurality of predetermined exposure durations less than the allowable exposure duration threshold value, as the predetermined preferred exposure duration.

The predetermined exposure parameters are updated based on the predetermined preferred exposure duration for capturing the to-be-processed images, such that, during capture of the to-be-processed images for composing the motion trajectory image, consistency of exposure effects and absence of motion distortion and blur in the to-be-processed images under different motion states may be ensured, thereby further ensuring clarity and consistency of image effects of the motion trajectory image after stitching and fusion.

Further, in some implementations, while updating the predetermined exposure parameters based on the predetermined preferred exposure duration, a brightness compensation gain for capturing the to-be-processed images may be synchronously adjusted, thereby further ensuring clarity and consistency of image effects of the motion trajectory image after stitching and fusion. The brightness compensation gain may be a corresponding gain preset according to motion speeds.

Further, in one embodiment, the plurality of to-be-processed images are acquired according to predetermined focus parameters; and the method further comprises: calculating a focus area according to subject positions corresponding to the respective to-be-processed images; and updating the predetermined focus parameters according to the focus area.

A focus area in an image may be calculated according to the subject positions corresponding to the respective to-be-processed images. By updating the predetermined focus parameters according to the focus area, it may be further ensured that a focus is locked on the moving subject during a photographing process, such that the moving subject does not suffer from out-of-focus blur, thereby further improving image quality of the motion trajectory image. The moving subject may be actively designated by a user or automatically selected based on a target recognition algorithm.

Further, in one embodiment, the determining, according to a motion parameter corresponding to each of the candidate composite images, foreground and background information, and the alignment position information, an area type of different image areas under the unified coordinate system comprises: obtaining, according to the motion parameter, the foreground and background information, and the alignment position information corresponding to each of the candidate composite images, a motion/still type, a foreground/background type, and an overlapping/non-overlapping type corresponding to region images aligned to the respective image areas; and obtaining the area type of each image area according to a combination of the motion/still type, the foreground/background type, and the overlapping/non-overlapping type corresponding to the region images in the respective image areas.

The large-range motion image under the unified coordinate system may be divided into different image areas according to a predetermined division mode. According to the motion parameters, foreground and background information, and alignment position information corresponding to each candidate composite image, motion/still types, foreground/background types, and overlapping/non-overlapping types of partial region images aligned to the respective image areas may be obtained. The motion/still types may comprise motion regions and static regions, the foreground/background types may comprise foregrounds and backgrounds, and the overlapping/non-overlapping types may comprise overlapping regions and non-overlapping regions.

Accordingly, according to combinations of the motion/still types, the foreground/background types, and the overlapping/non-overlapping types corresponding to the region images in the respective image areas, area types of the respective image areas may be obtained. The area types may comprise a foreground motion region, a foreground static overlapping region, a foreground static non-overlapping region, a background motion overlapping region, a background motion non-overlapping region, a background static overlapping region, and a background static non-overlapping region. For example, the foreground motion region is an area type corresponding to a combination of a foreground and a motion region, the foreground static overlapping region is an area type corresponding to a combination of a foreground, a static region, and an overlapping region, and so on.

Further, in one embodiment, the performing noise reduction on area images aligned to the respective image areas according to noise reduction modes corresponding to the area types of the respective image areas, to obtain a plurality of background noise-reduced images and a plurality of foreground noise-reduced images may comprise:

Performing noise reduction on region images in image areas of an overlapping type through a multi-frame fusion noise reduction mode, to obtain fusion noise-reduced region images.

Performing noise reduction on region images in image areas of a non-overlapping type through a single-frame fusion noise reduction mode, to obtain single-frame noise-reduced region images.

Obtaining the plurality of background noise-reduced images and the plurality of foreground noise-reduced images according to the fusion noise-reduced region images and the single-frame noise-reduced region images.

The image areas of an overlapping type are image areas in which combinations corresponding to the area types comprise overlapping regions, and the image areas of a non-overlapping type are image areas in which combinations corresponding to the area types comprise non-overlapping regions.

By performing noise reduction on region images in image areas of an overlapping type through a multi-frame fusion noise reduction mode to obtain fusion noise-reduced region images, and performing noise reduction on region images in image areas of a non-overlapping type through a single-frame fusion noise reduction mode to obtain single-frame noise-reduced region images, motion blur caused by exposure parameters and the like during rapid movement of the subject can be very effectively avoided, thereby further ensuring image quality of the synthesized motion trajectory image. The multi-frame fusion noise reduction mode and the single-frame fusion noise reduction mode may employ existing frame fusion noise reduction modes and single-frame fusion noise reduction modes.

According to the fusion noise-reduced region images and the single-frame noise-reduced region images, the noise-reduced region images belonging to the subject foreground and the non-subject background in the respective candidate composite images may be re-stitched to obtain a noise-reduced subject foreground (that is, a foreground noise-reduced image) and a noise-reduced non-subject background (that is, a background noise-reduced image), thereby obtaining the plurality of background noise-reduced images and the plurality of foreground noise-reduced images.

Further, in one embodiment, after the performing noise reduction on area images aligned to the respective image areas according to noise reduction modes corresponding to the area types of the respective image areas, to obtain a plurality of background noise-reduced images and a plurality of foreground noise-reduced images, the method further comprises: stitching the plurality of background noise-reduced images into an integral background image under the unified coordinate system according to the alignment position information; fusing the plurality of foreground noise-reduced images with the integral background image, to obtain a fused trajectory image; and obtaining the subject motion trajectory image according to the fused trajectory image.

According to the alignment position information, the plurality of background noise-reduced images may be cropped and stitched into an integral background image corresponding to an overall motion range of the moving subject under the unified coordinate system. Then, the plurality of foreground noise-reduced images are fused with the integral background image, such that the moving subject in the plurality of foreground noise-reduced images is composited onto the integral background image, thereby forming one complete fused trajectory image. According to the fused trajectory image, a subject motion trajectory image representing a motion trajectory of the moving subject may be obtained.

The obtaining the subject motion trajectory image according to the fused trajectory image may specifically comprise: taking the fused trajectory image as the obtained subject motion trajectory image; or performing smoothing processing on the fused trajectory image by using an image smoothing algorithm such that a transition between a foreground and a background is natural, to obtain a smoothed image, and then generating a motion trajectory photo of a selected area by cropping the smoothed image, as a final subject motion trajectory image.

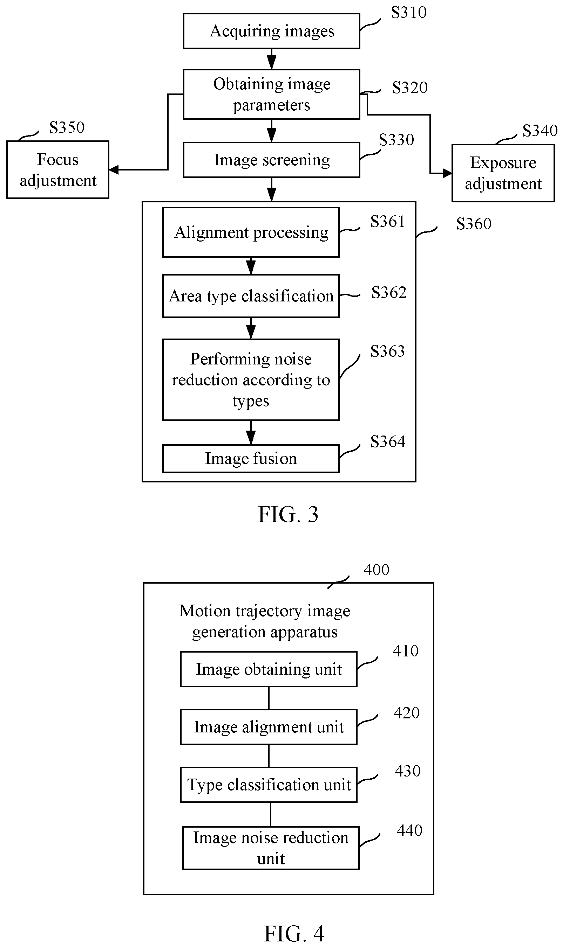

For facilitating better implementation of the motion trajectory image generation method provided in the embodiments of the present application, the foregoing embodiments are further described below with reference to a process of motion trajectory image generation in one scenario. Referring to FIGS. 2 and 3, FIG. 2 illustrates a block diagram of an apparatus for generating a motion trajectory image by applying embodiments of the present application in one scenario, and FIG. 3 illustrates a flowchart of generating a motion trajectory image by applying embodiments of the present application in one scenario.

As illustrated in FIG. 2, in this scenario, the apparatus for generating the motion trajectory image may comprise an image acquisition module 210, an intelligent focus tracking module 220, a motion detection module 230, a dynamic exposure module 240, an image screening module 250, and an image processing module 260.

Referring to FIG. 3, in this scenario, the process of motion trajectory image generation may comprise steps S310 to S360.

Step S310: acquiring images. Specifically, obtaining a plurality of to-be-processed images.

The image acquisition module 210 may acquire images in real time, thereby obtaining a sequence of the plurality of to-be-processed images.

Step S320: obtaining image parameters. Specifically, obtaining focus states, subject positions, and exposure states corresponding to the respective to-be-processed images.

The intelligent focus tracking module 220 may perform automatic focus tracking on each of the to-be-processed images, to obtain a focus state corresponding to each of the to-be-processed images (used to reflect whether the to-be-processed image is an image during a focusing process) and a subject position (that is, a position where the moving subject is located).

The dynamic exposure module 240 may detect an exposure state for capturing each of the to-be-processed images (used to reflect whether the to-be-processed image is an image during an exposure convergence process).

Step S330: image screening. Specifically, screening, from the plurality of to-be-processed images according to the screening parameters corresponding to the respective to-be-processed images, to-be-processed images satisfying predetermined conditions, to obtain the plurality of candidate composite images, wherein the predetermined conditions comprise not being in a focusing process, not being in an exposure convergence process, and satisfying a subject definition requirement.

The image screening module 250 may perform image screening to obtain the plurality of candidate composite images.

Step S340: exposure adjustment. Specifically, obtaining motion parameters and allowable displacement threshold values corresponding to the respective to-be-processed images; determining an allowable exposure duration threshold value according to the motion parameters and the allowable displacement threshold values; obtaining, according to scene brightness, a predetermined preferred exposure duration less than the allowable exposure duration threshold value; and updating predetermined exposure parameters based on the predetermined preferred exposure duration.

The dynamic exposure module 240 may update the predetermined exposure parameters in the image acquisition module 210 based on the predetermined preferred exposure duration.

Step S350: focus adjustment. Specifically, calculating a focus area according to subject positions corresponding to the respective to-be-processed images; and updating predetermined focus parameters according to the focus area.

The intelligent focus tracking module 220 may update the predetermined focus parameters in the image acquisition module 210 according to the focus area.

Step S360: image processing. Step S360 may specifically comprise steps S361 to S364. The image processing module 260 may comprise: an image alignment unit configured to perform step S361; a type classification unit configured to perform step S362; an image noise reduction unit configured to perform step S363; and an image fusion unit configured to perform step S364.

Step S361: alignment processing. Specifically, aligning the plurality of candidate composite images to a unified coordinate system based on non-subject backgrounds in each candidate composite image, to obtain alignment position information, under the unified coordinate system, of a subject foreground and the non-subject background in each candidate composite image.

Step S362: area type classification. Specifically, determining area types of different image areas under the unified coordinate system according to motion parameters, foreground and background information, and alignment position information corresponding to the respective candidate composite images.

Specifically, motion/still types, foreground/background types, and overlapping/non-overlapping types corresponding to region images aligned to the respective image areas may be obtained according to the motion parameters, foreground and background information, and alignment position information corresponding to each candidate composite image; and area types of the respective image areas may be obtained according to combinations of the motion/still types, the foreground/background types, and the overlapping/non-overlapping types corresponding to the region images in the respective image areas. The area types may comprise a foreground motion region, a foreground static overlapping region, a foreground static non-overlapping region, a background motion overlapping region, a background motion non-overlapping region, a background static overlapping region, and a background static non-overlapping region.

Step S363: performing noise reduction according to types. Specifically, performing noise reduction on region images aligned to the respective image areas according to noise reduction modes corresponding to area types of the respective image areas, to obtain a plurality of background noise-reduced images and a plurality of foreground noise-reduced images, wherein the plurality of background noise-reduced images and the plurality of foreground noise-reduced images are used for composing a subject motion trajectory image.

Specifically, noise reduction may be performed on region images in image areas of an overlapping type through a multi-frame fusion noise reduction mode, to obtain fusion noise-reduced region images; noise reduction may be performed on region images in image areas of a non-overlapping type through a single-frame fusion noise reduction mode, to obtain single-frame noise-reduced region images; and the plurality of background noise-reduced images and the plurality of foreground noise-reduced images may be obtained according to the fusion noise-reduced region images and the single-frame noise-reduced region images.

Step S364: image fusion. Specifically, stitching the plurality of background noise-reduced images into an integral background image under the unified coordinate system according to the alignment position information; fusing the plurality of foreground noise-reduced images with the integral background image, to obtain a fused trajectory image; and obtaining a subject motion trajectory image according to the fused trajectory image.

In this manner, in this scenario, by applying embodiments of the present application, at least the following beneficial effects may be achieved: after background separation is performed on the plurality of candidate composite images, the plurality of candidate composite images are independently aligned to the unified coordinate system according to non-subject backgrounds, such that acquisition of original images is not limited by a field of view, and an image acquisition process may follow movement of a subject to enlarge a field-of-view range, thereby improving trajectory integrity of the motion trajectory image in a large-range motion scenario; furthermore, by classifying area types of image areas under the unified coordinate system, and performing noise reduction on area images aligned to the respective image areas according to noise reduction modes corresponding to the area types of the respective image areas, motion blur caused by exposure parameters and the like during rapid movement of the subject can be effectively avoided, thereby further ensuring image quality of the synthesized motion trajectory image. As a whole, image quality and trajectory integrity of generated motion trajectory images in most motion scenarios can be effectively improved, thereby improving user experience.

For facilitating better implementation of the motion trajectory image generation method provided in the embodiments of the present application, the embodiments of the present application further provide a motion trajectory image generation apparatus based on the foregoing motion trajectory image generation method. Meanings of terms therein are the same as those in the foregoing motion trajectory image generation method, and specific implementation details may refer to descriptions in the method embodiments. FIG. 4 illustrates a block diagram of a motion trajectory image generation apparatus according to an embodiment of the present application.

As illustrated in FIG. 4, the motion trajectory image generation apparatus 400 may comprise: an image obtaining unit 410 configured to obtain a plurality of candidate composite images; an image alignment unit 420 configured to align the plurality of candidate composite images to a unified coordinate system based on non-subject backgrounds in each of the candidate composite images, to obtain alignment position information, under the unified coordinate system, of a subject foreground and the non-subject background in each of the candidate composite images; a type classification unit 430 configured to determine, according to motion parameters, foreground and background information, and alignment position information corresponding to the respective candidate composite images, area types of different image areas under the unified coordinate system; and an image noise reduction unit 440 configured to perform noise reduction on region images aligned to the respective image areas according to noise reduction modes corresponding to the area types of the respective image areas, to obtain a plurality of background noise-reduced images and a plurality of foreground noise-reduced images, wherein the plurality of background noise-reduced images and the plurality of foreground noise-reduced images are used for composing a subject motion trajectory image.

In some embodiments of the present application, the type classification unit is configured to: obtain, according to the motion parameters, foreground and background information, and alignment position information corresponding to the respective candidate composite images, motion/still types, foreground/background types, and overlapping/non-overlapping types corresponding to region images aligned to the respective image areas; and obtain area types of the respective image areas according to combinations of the motion/still types, the foreground/background types, and the overlapping/non-overlapping types corresponding to the region images in the respective image areas.

In some embodiments of the present application, the image noise reduction unit is configured to: perform noise reduction on region images in image areas of an overlapping type through a multi-frame fusion noise reduction mode, to obtain fusion noise-reduced region images; perform noise reduction on region images in image areas of a non-overlapping type through a single-frame fusion noise reduction mode, to obtain single-frame noise-reduced region images; and obtain the plurality of background noise-reduced images and the plurality of foreground noise-reduced images according to the fusion noise-reduced region images and the single-frame noise-reduced region images.

In some embodiments of the present application, the image obtaining unit is configured to: obtain a plurality of to-be-processed images; obtain at least one of a focus state, a subject position, or an exposure state corresponding to each of the to-be-processed images, to obtain screening parameters; and screen, from the plurality of to-be-processed images according to the screening parameters corresponding to the respective to-be-processed images, to-be-processed images satisfying predetermined conditions, to obtain the plurality of candidate composite images, wherein the predetermined conditions comprise at least one of not being in a focusing process, not being in an exposure convergence process, or satisfying a subject definition requirement.

In some embodiments of the present application, the plurality of to-be-processed images are acquired according to predetermined exposure parameters; and the apparatus further comprises an exposure adjustment unit configured to: obtain motion parameters and allowable displacement threshold values corresponding to the respective to-be-processed images; determine an allowable exposure duration threshold value according to the motion parameters and the allowable displacement threshold values; obtain, according to scene brightness, a predetermined preferred exposure duration less than the allowable exposure duration threshold value; and update the predetermined exposure parameters based on the predetermined preferred exposure duration.

In some embodiments of the present application, the plurality of to-be-processed images are acquired according to predetermined focus parameters; and the apparatus further comprises a focus adjustment unit configured to: calculate a focus area according to subject positions corresponding to the respective to-be-processed images; and update the predetermined focus parameters according to the focus area.

In some embodiments of the present application, after the performing noise reduction on area images aligned to the respective image areas according to noise reduction modes corresponding to the area types of the respective image areas, to obtain a plurality of background noise-reduced images and a plurality of foreground noise-reduced images, the apparatus further comprises a fusion unit configured to: stitch the plurality of background noise-reduced images into an integral background image under the unified coordinate system according to the alignment position information; fuse the plurality of foreground noise-reduced images with the integral background image, to obtain a fused trajectory image; and obtain the subject motion trajectory image according to the fused trajectory image.

It should be noted that, although several modules or units of the apparatus for action execution are mentioned in the foregoing detailed description, such division is not mandatory. In fact, according to embodiments of the present application, features and functions of two or more modules or units described above may be embodied in one module or unit. Conversely, features and functions of one module or unit described above may be further divided and embodied by a plurality of modules or units.

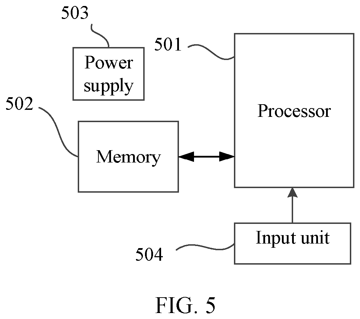

In addition, embodiments of the present application further provide an electronic device. As illustrated in FIG. 5, FIG. 5 illustrates a block diagram of an electronic device according to an embodiment of the present application. Specifically:

The electronic device may comprise components such as a processor 501 having one or more processing cores, a memory 502 having one or more computer-readable storage media, a power supply 503, and an input unit 504. A person skilled in the art may understand that the electronic device structure illustrated in FIG. 5 does not constitute a limitation on the electronic device, and may comprise more or fewer components than those illustrated, or may combine certain components, or may adopt different component arrangements. Specifically:

The processor 501 is a control center of the electronic device, and connects various parts of the entire computer device by using various interfaces and lines. By running or executing software programs and/or modules stored in the memory 502, and invoking data stored in the memory 502, the processor 501 executes various functions of the computer device and processes data, thereby performing overall monitoring of the electronic device. Optionally, the processor 501 may comprise one or more processing cores. Preferably, the processor 501 may integrate an application processor and a modem processor, wherein the application processor mainly processes an operating system, user interfaces, application programs, and the like, and the modem processor mainly processes wireless communications. It may be understood that the foregoing modem processor may alternatively not be integrated into the processor 501.

The memory 502 may be configured to store software programs and modules, and the processor 501 executes various functional applications and data processing by running the software programs and modules stored in the memory 502. The memory 502 may mainly comprise a program storage area and a data storage area, wherein the program storage area may store an operating system, application programs required for at least one function (such as a sound playback function, an image playback function, and the like), and the like; and the data storage area may store data created according to usage of the computer device, and the like. In addition, the memory 502 may comprise a high-speed random access memory, and may further comprise a non-volatile memory, such as at least one disk storage device, flash memory device, or another volatile solid-state storage device. Correspondingly, the memory 502 may further comprise a memory controller to provide access by the processor 501 to the memory 502.

The electronic device further comprises a power supply 503 configured to supply power to various components. Preferably, the power supply 503 may be logically connected to the processor 501 through a power management system, thereby implementing functions such as charging management, discharging management, and power consumption management through the power management system. The power supply 503 may further comprise any component such as one or more direct current or alternating current power supplies, a rechargeable system, a power failure detection circuit, a power converter or inverter, and a power status indicator.

The electronic device may further comprise an input unit 504 configured to receive input digital or character information, and generate keyboard, mouse, joystick, optical, or trackball signal input related to user settings and function control.

Although not illustrated, the electronic device may further comprise a display unit and the like, which are not described herein again. Specifically, in this embodiment, the processor 501 in the electronic device loads executable files corresponding to processes of one or more computer programs into the memory 502 according to the following instructions, and runs the computer programs stored in the memory 502 through the processor 501, thereby implementing various functions in the foregoing embodiments of the present application. For example, the processor 501 may perform the following steps:

Obtaining a plurality of candidate composite images; aligning the plurality of candidate composite images to a unified coordinate system based on non-subject backgrounds in each of the candidate composite images, to obtain alignment position information, under the unified coordinate system, of a subject foreground and the non-subject background in each of the candidate composite images; determining, according to motion parameters, foreground and background information, and alignment position information corresponding to the respective candidate composite images, area types of different image areas under the unified coordinate system; and performing noise reduction on region images aligned to the respective image areas according to noise reduction modes corresponding to the area types of the respective image areas, to obtain a plurality of background noise-reduced images and a plurality of foreground noise-reduced images, wherein the plurality of background noise-reduced images and the plurality of foreground noise-reduced images are used for composing a subject motion trajectory image.

In some embodiments of the present application, the determining, according to motion parameters, foreground and background information, and alignment position information corresponding to the respective candidate composite images, area types of different image areas under the unified coordinate system comprises: obtaining, according to the motion parameters, foreground and background information, and alignment position information corresponding to the respective candidate composite images, motion/still types, foreground/background types, and overlapping/non-overlapping types corresponding to region images aligned to the respective image areas; and obtaining area types of the respective image areas according to combinations of the motion/still types, the foreground/background types, and the overlapping/non-overlapping types corresponding to the region images in the respective image areas.

In some embodiments of the present application, the performing noise reduction on region images aligned to the respective image areas according to noise reduction modes corresponding to the area types of the respective image areas, to obtain a plurality of background noise-reduced images and a plurality of foreground noise-reduced images comprises: performing noise reduction on region images in image areas of an overlapping type through a multi-frame fusion noise reduction mode, to obtain fusion noise-reduced region images; performing noise reduction on region images in image areas of a non-overlapping type through a single-frame fusion noise reduction mode, to obtain single-frame noise-reduced region images; and obtaining the plurality of background noise-reduced images and the plurality of foreground noise-reduced images according to the fusion noise-reduced region images and the single-frame noise-reduced region images.

In some embodiments of the present application, the obtaining a plurality of candidate composite images comprises: obtaining a plurality of to-be-processed images; obtaining at least one of a focus state, a subject position, or an exposure state corresponding to each of the to-be-processed images, to obtain screening parameters; and screening, from the plurality of to-be-processed images according to the screening parameters corresponding to the respective to-be-processed images, to-be-processed images satisfying predetermined conditions, to obtain the plurality of candidate composite images, wherein the predetermined conditions comprise at least one of not being in a focusing process, not being in an exposure convergence process, or satisfying a subject definition requirement.

In some embodiments of the present application, the plurality of to-be-processed images are acquired according to predetermined exposure parameters; and the method further comprises: obtaining motion parameters and allowable displacement threshold values corresponding to the respective to-be-processed images; determining an allowable exposure duration threshold value according to the motion parameters and the allowable displacement threshold values; obtaining, according to scene brightness, a predetermined preferred exposure duration less than the allowable exposure duration threshold value; and updating the predetermined exposure parameters based on the predetermined preferred exposure duration.

In some embodiments of the present application, the plurality of to-be-processed images are acquired according to predetermined focus parameters; and the method further comprises: calculating a focus area according to subject positions corresponding to the respective to-be-processed images; and updating the predetermined focus parameters according to the focus area.

In some embodiments of the present application, after the performing noise reduction on region images aligned to the respective image areas according to noise reduction modes corresponding to the area types of the respective image areas, to obtain a plurality of background noise-reduced images and a plurality of foreground noise-reduced images, the method further comprises: stitching the plurality of background noise-reduced images into an integral background image under the unified coordinate system according to the alignment position information; fusing the plurality of foreground noise-reduced images with the integral background image, to obtain a fused trajectory image; and obtaining the subject motion trajectory image according to the fused trajectory image.

A person skilled in the art may understand that all or part of the steps in various methods of the foregoing embodiments may be completed by a computer program, or completed by controlling related hardware through a computer program. The computer program may be stored in a computer-readable storage medium, and loaded and executed by a processor.

Accordingly, embodiments of the present application further provide a storage medium storing a computer program, wherein the computer program may be loaded by a processor to execute steps in any one of the methods provided in the embodiments of the present application.

The storage medium may be a computer-readable storage medium, and the storage medium may comprise: a read-only memory (ROM), a random access memory (RAM), a magnetic disk, an optical disk, and the like.

Since the computer program stored in the storage medium may execute the steps in any one of the methods provided in the embodiments of the present application, beneficial effects achievable by the methods provided in the embodiments of the present application may be realized. For details, reference may be made to the foregoing embodiments, and details are not repeated herein again.

After considering the specification and practicing the embodiments disclosed herein, a person skilled in the art will readily conceive of other implementations of the present application. The present application is intended to cover any variations, uses, or adaptive changes of the present application, and such variations, uses, or adaptive changes follow the general principles of the present application and comprise common general knowledge or conventional technical means in the technical field not disclosed in the present application.

It should be understood that the present application is not limited to the embodiments described above and illustrated in the drawings, and various modifications and changes may be made without departing from the scope thereof.

## Claims

1. A motion trajectory image generation method, comprising:
obtaining a plurality of candidate composite images;
aligning the plurality of candidate composite images to a unified coordinate system based on non-subject backgrounds in each of the candidate composite images, to obtain alignment position information, under the unified coordinate system, of a subject foreground and the non-subject background in each of the candidate composite images;
determining, according to a motion parameter corresponding to each of the candidate composite images, foreground and background information, and the alignment position information, an area type of different image areas under the unified coordinate system; and
performing noise reduction on area images aligned to the respective image areas according to noise reduction modes corresponding to the area types of the respective image areas, to obtain a plurality of background noise-reduced images and a plurality of foreground noise-reduced images, wherein the plurality of background noise-reduced images and the plurality of foreground noise-reduced images are used for composing a subject motion trajectory image.

2. The method according to claim 1, wherein the determining, according to a motion parameter corresponding to each of the candidate composite images, foreground and background information, and the alignment position information, an area type of different image areas under the unified coordinate system comprises:
obtaining, according to the motion parameter, the foreground and background information, and the alignment position information corresponding to each of the candidate composite images, a motion/still type, a foreground/background type, and an overlapping/non-overlapping type corresponding to region images aligned to the respective image areas; and
obtaining the area type of each image area according to a combination of the motion/still type, the foreground/background type, and the overlapping/non-overlapping type corresponding to the region images in the respective image areas.

3. The method according to claim 1, wherein the performing noise reduction on area images aligned to the respective image areas according to noise reduction modes corresponding to the area types of the respective image areas, to obtain a plurality of background noise-reduced images and a plurality of foreground noise-reduced images comprises:
performing noise reduction on region images in image areas of an overlapping type through a multi-frame fusion noise reduction mode, to obtain fusion noise-reduced region images;
performing noise reduction on region images in image areas of a non-overlapping type through a single-frame fusion noise reduction mode, to obtain single-frame noise-reduced region images; and
obtaining the plurality of background noise-reduced images and the plurality of foreground noise-reduced images according to the fusion noise-reduced region images and the single-frame noise-reduced region images.

4. The method according to claim 1, wherein the obtaining a plurality of candidate composite images comprises:
obtaining a plurality of to-be-processed images;
obtaining at least one of a focus state, a subject position, or an exposure state corresponding to each of the to-be-processed images, to obtain screening parameters; and
screening, from the plurality of to-be-processed images according to the screening parameters corresponding to the respective to-be-processed images, to-be-processed images satisfying predetermined conditions, to obtain the plurality of candidate composite images, wherein the predetermined conditions comprise at least one of not being in a focusing process, not being in an exposure convergence process, or satisfying a subject definition requirement.

5. The method according to claim 4, wherein the plurality of to-be-processed images are acquired according to predetermined exposure parameters; and the method further comprises:
obtaining motion parameters and allowable displacement threshold values corresponding to the respective to-be-processed images;
determining an allowable exposure duration threshold value according to the motion parameters and the allowable displacement threshold values;
obtaining, according to scene brightness, a predetermined preferred exposure duration less than the allowable exposure duration threshold value; and
updating the predetermined exposure parameters based on the predetermined preferred exposure duration.

6. The method according to claim 4, wherein the plurality of to-be-processed images are acquired according to predetermined focus parameters; and the method further comprises:
calculating a focus area according to subject positions corresponding to the respective to-be-processed images; and
updating the predetermined focus parameters according to the focus area.

7. The method according to claim 1, wherein after the performing noise reduction on area images aligned to the respective image areas according to noise reduction modes corresponding to the area types of the respective image areas, to obtain a plurality of background noise-reduced images and a plurality of foreground noise-reduced images, the method further comprises:
stitching the plurality of background noise-reduced images into an integral background image under the unified coordinate system according to the alignment position information;
fusing the plurality of foreground noise-reduced images with the integral background image, to obtain a fused trajectory image; and
obtaining the subject motion trajectory image according to the fused trajectory image.

8. The method according to claim 1, wherein the obtaining a plurality of candidate composite images comprises:
obtaining a plurality of to-be-processed images, and taking the plurality of to-be-processed images as the plurality of candidate composite images.

9. The method according to claim 5, wherein the obtaining, according to scene brightness, a predetermined preferred exposure duration less than the allowable exposure duration threshold value comprises:
obtaining, according to the scene brightness, one predetermined exposure duration matching the scene brightness from among a plurality of predetermined exposure durations less than the allowable exposure duration threshold value, as the predetermined preferred exposure duration.

10. The method according to claim 7, wherein the obtaining the subject motion trajectory image according to the fused trajectory image comprises:
taking the fused trajectory image as the obtained subject motion trajectory image; or
performing smoothing processing on the fused trajectory image by using an image smoothing algorithm, to obtain a smoothed image, and generating a motion trajectory photo of a selected area by cropping the smoothed image, as the subject motion trajectory image.

11. The method according to claim 4, wherein the plurality of to-be-processed images are an image sequence captured in real time for a moving subject; and
the obtaining at least one of a focus state, a subject position, or an exposure state corresponding to each of the to-be-processed images, to obtain screening parameters comprises:
performing automatic focus tracking on each of the to-be-processed images, to obtain the focus state and the subject position corresponding to each of the to-be-processed images;
detecting an exposure process for capturing each of the to-be-processed images, to obtain the exposure state corresponding to each of the to-be-processed images; and
taking the focus state, the subject position, and the exposure state corresponding to the respective to-be-processed images as the screening parameters of the respective to-be-processed images.

12. The method according to claim 4, wherein the plurality of to-be-processed images are a pre-stored image sequence; and
the obtaining at least one of a focus state, a subject position, or an exposure state corresponding to each of the to-be-processed images, to obtain screening parameters comprises:
obtaining the focus state, the subject position, and the exposure state corresponding to the respective to-be-processed images from information corresponding to the respective to-be-processed images pre-stored frame by frame; and
taking the focus state, the subject position, and the exposure state corresponding to the respective to-be-processed images as the screening parameters of the respective to-be-processed images.

13. The method according to claim 5, wherein after the obtaining, according to scene brightness, a predetermined preferred exposure duration less than the allowable exposure duration threshold value, the method further comprises:
while updating the predetermined exposure parameters based on the predetermined preferred exposure duration, synchronously adjusting a brightness compensation gain for capturing the to-be-processed images.

14. A motion trajectory image generation apparatus, comprising:
an image obtaining unit, configured to obtain a plurality of candidate composite images;
an image alignment unit, configured to align the plurality of candidate composite images to a unified coordinate system based on non-subject backgrounds in each of the candidate composite images, to obtain alignment position information, under the unified coordinate system, of a subject foreground and the non-subject background in each of the candidate composite images;
a type classification unit, configured to determine, according to a motion parameter corresponding to each of the candidate composite images, foreground and background information, and the alignment position information, an area type of different image areas under the unified coordinate system; and
an image noise reduction unit, configured to perform noise reduction on area images aligned to the respective image areas according to noise reduction modes corresponding to the area types of the respective image areas, to obtain a plurality of background noise-reduced images and a plurality of foreground noise-reduced images, wherein the plurality of background noise-reduced images and the plurality of foreground noise-reduced images are used for composing a subject motion trajectory image.

15. The apparatus according to claim 14, wherein the type classification unit is configured to:
obtain, according to the motion parameter, the foreground and background information, and the alignment position information corresponding to each of the candidate composite images, a motion/still type, a foreground/background type, and an overlapping/non-overlapping type corresponding to region images aligned to the respective image areas; and
obtain the area type of each image area according to a combination of the motion/still type, the foreground/background type, and the overlapping/non-overlapping type corresponding to the region images in the respective image areas.

16. The apparatus according to claim 14, wherein the image noise reduction unit is configured to:
perform noise reduction on region images in image areas of an overlapping type through a multi-frame fusion noise reduction mode, to obtain fusion noise-reduced region images;
perform noise reduction on region images in image areas of a non-overlapping type through a single-frame fusion noise reduction mode, to obtain single-frame noise-reduced region images; and
obtain the plurality of background noise-reduced images and the plurality of foreground noise-reduced images according to the fusion noise-reduced region images and the single-frame noise-reduced region images.

17. The apparatus according to claim 14, wherein the image obtaining unit is configured to:
obtain a plurality of to-be-processed images;
obtain at least one of a focus state, a subject position, or an exposure state corresponding to each of the to-be-processed images, to obtain screening parameters; and
screen, from the plurality of to-be-processed images according to the screening parameters corresponding to the respective to-be-processed images, to-be-processed images satisfying predetermined conditions, to obtain the plurality of candidate composite images, wherein the predetermined conditions comprise at least one of not being in a focusing process, not being in an exposure convergence process, or satisfying a subject definition requirement.

18. The apparatus according to claim 17, wherein the plurality of to-be-processed images are acquired according to predetermined exposure parameters; and the apparatus further comprises an exposure adjustment unit, configured to:
obtain motion parameters and allowable displacement threshold values corresponding to the respective to-be-processed images;
determine an allowable exposure duration threshold value according to the motion parameters and the allowable displacement threshold values;
obtain, according to scene brightness, a predetermined preferred exposure duration less than the allowable exposure duration threshold value; and
update the predetermined exposure parameters based on the predetermined preferred exposure duration.

19. A storage medium, wherein a computer program is stored thereon, and when the computer program is executed by a processor of a computer, the computer is caused to perform the method according to any one of claims 1 to 13.

20. An electronic device, comprising:
a memory storing a computer program; and
a processor configured to read the computer program stored in the memory, and execute the method according to any one of claims 1 to 13.
